# EUROPÄISCHE PATENTSCHRIFT

(11) **EP 2 699 748 B1**
(45) Veröffentlichungstag und Bekanntmachung des Hinweises auf die Patenterteilung: **12.07.2017**
(21) Anmeldenummer: 12719596.4
(22) Anmeldetag: 04.05.2012
(51) Int. Cl.: E05F 15/611

(54) **VORRICHTUNG ZUM BEWEGEN EINES BEWEGBAREN MÖBELTEILS UND MÖBEL**
DEVICE FOR MOVING A MOVABLE FURNITURE PART, AND PIECE OF FURNITURE
DISPOSITIF POUR DÉPLACER UN ÉLÉMENT MOBILE D'UN MEUBLE, ET MEUBLE

(30) Priorität: 12.05.2011 DE 202011100573 U
(43) Veröffentlichungstag der Anmeldung: 26.02.2014
(73) Patentinhaber: Grass GmbH, 6973 Höchst (AT)
(72) Erfinder: WENZEL, Holger, 88131 Lindau (DE)
(74) Vertreter: Patentanwälte Magenbauer & Kollegen Partnerschaft mbB
(86) Internationale Anmeldenummer: PCT/EP2012/001917
(87) Internationale Veröffentlichungsnummer: WO 2012/152417

(56) Entgegenhaltungen:
- WO-A1-2006/099645
- WO-A1-2007/035971
- DE-A1-102005 044 690

## Beschreibung

Die Erfindung betrifft eine Vorrichtung zum Bewegen eines an einem Möbelkorpus bewegbar aufgenommenen Möbelteils, insbesondere Klappe, Tür oder Schublade, mit einem Stellantrieb, der in einem Antriebsmodus mit dem bewegbaren Möbelteil verbunden ist und das bewegbare Möbelteil antreibt, und mit einer mit dem Stellantrieb verbundenen Sensorikeinrichtung zur Ansteuerung des Stellantriebs. Die Erfindung umfasst ferner ein mit einer derartigen Vorrichtung ausgestattetes Möbel.

Es ist bereits bekannt, bewegbar in einem Möbelkorpus eines Möbels aufgenommene Möbelteile mittels eines Stellantriebs beweglich anzutreiben. Ferner sind Sensorikeinrichtungen bekannt, über die eine Erfassung von für die Kontrolle der Bewegung des bewegbaren Möbelteils notwendige physikalische Größen erfassbar sind. Die Sensorikeinrichtung kann derart eingerichtet sein, dass sie mit dem Stellantrieb kommuniziert, so dass der Stellantrieb in Abhängigkeit eines ermittelten Steuersignals ansteuerbar ist, womit letztendlich die Bewegung des bewegbaren Möbelteils gesteuert werden kann. Die WO2007/035971 offenbart die Merkmale des Oberbegriffs des Anspruchs 1.

Aufgabe der Erfindung ist es, eine Vorrichtung bzw. ein Möbel der eingangs erwähnten Art zu schaffen, bei der bzw. bei dem das bewegbare Möbelteil noch komfortabler bedienbar ist. Insbesondere soll dadurch eine intuitive Bedienung des bewegbaren Möbelteils möglich sein.

Diese Aufgabe wird durch eine Vorrichtung zum Bewegen eines am Möbelkorpus bewegbar aufgenommenen Möbelteils gemäß dem unabhängigen Anspruch 1 und einem Möbel gemäß dem Anspruch 11 gelöst. Weiterbildungen der Erfindung sind in den Unteransprüchen dargestellt.

Die erfindungsgemäße Vorrichtung zeichnet sich dadurch aus, dass die Sensorikeinrichtung einen Datenspeicher aufweist und derart ausgebildet ist, dass im montierten Nutzzustand der Vorrichtung über den Benutzer auf das bewegliche Möbelteil einwirkende, für die Kontrolle dessen Bewegung dienende physikalische Zustandsgrößen erfassbar sind und in den Datenspeicher einlesbar sind, wobei im Datenspeicher Bewegungsprofile abgespeichert oder abspeicherbar sind, die jeweils einer bestimmten durch Einwirken auf das bewegliche Möbelteil von außen ausgelöste und durch physikalische Zustandsgrößen beschreibbare Bewegungssituationen des beweglichen Möbelteils zugeordnet sind, und wobei mit Hilfe wenigstens einer erfassten physikalischen Zustandsgröße ein bestimmtes zugeordnetes Bewegungsprofil aus dem Datenspeicher abrufbar und der Stellantrieb gemäß dem abgerufenen Bewegungsprofil ansteuerbar ist.

Beim Bedienen des beweglichen Möbelteils wird also mit der Sensorikeinrichtung eine physikalische Zustandsgröße gemessen bzw. erfasst. Ist die erfasste physikalische Zustandsgröße repräsentativ für ein abgespeichertes Bewegungsprofil, wird dieses aus dem Datenspeicher ausgelesen, so dass der Stellantrieb und somit das damit verbundene bewegliche Möbelteil gemäß des Bewegungsprofils bewegt wird. Das Bewegungsprofil kann dabei derart ablaufen, dass prinzipiell eine aktive Mitbewegung durch den Benutzer nicht mehr notwendig ist. Der Benutzer könnte also loslassen. Es ist jedoch auch möglich, dass wenigstens ein Bewegungsprofil derart ausgelegt ist, dass eine aktive Bewegungsunterstützung durch den Benutzer möglich ist. Insgesamt wird dadurch ein großer Bedienkomfort erreicht. Man könnte hier auch von einem intelligenten beweglichen Möbelteil sprechen, da die Vorrichtung ganz intuitiv auf eine bestimmte Bewegungssituation mittels eines bestimmten Bewegungsprofils reagiert.

Das bewegbar aufgenommene Möbelteil kann beispielsweise eine über eine Führungseinheit verschieblich an einem Möbelkorpus bewegbar aufgenommene Schublade bzw. ein Auszug sein bzw. eine gegenüber einem Möbelkorpus verschwenkbare Tür, Klappe oder dergleichen.

Zwischen dem Stellantrieb und dem beweglichen Möbelteil kann eine Schnittstelle mit beispielsweise Getriebe- bzw. Kupplungskomponenten vorgesehen sein, wodurch wahlweise ein mittels des Stellantriebs bewirkter oder ein manueller Antrieb des beweglichen Möbelteils möglich ist. In diesem Fall sind die Bewegungsmuster dann lediglich im nicht-manuellen Antrieb des beweglichen Möbelteils abrufbar. Beim manuellen Antrieb des beweglichen Möbelteils ist der Stellantrieb ja vom beweglichen Möbelteil abgekuppelt. In besonders bevorzugter Weise besteht jedoch zwischen dem Stellantrieb und dem beweglichen Möbelteil stets eine Verbindung. Es kann hier also auf eine Schnittstelle mit Getriebe- und/oder Kupplungskomponenten verzichtet werden. Erfindungsgemäß weist die Sensorikeinrichtung einen Betriebsmodus auf, in dem bereits abgespeicherte Bewegungsprofile aus dem Datenspeicher abrufbar sind. Zweckmäßigerweise besitzt die Sensorikeinrichtung neben dem Betriebsmodus einen Lernmodus, der anstelle des Betriebsmodus aktivierbar ist. Ist der Lernmodus aktiviert, ist es möglich, dass neue Bewegungsprofile während des Bewegens des beweglichen Möbelteils einlernbar und in den Datenspeicher abspeicherbar sind. Dies ist beispielsweise dann sinnvoll, wenn die Bewegungsprofile im eingebauten Nutzzustand der Vorrichtung an einen bestimmten Benutzer angepasst werden sollen, der häufig das bewegliche Möbelteil bedient. Es sind also auf wenigstens einen bestimmten Benutzer personalisierte Bewegungsprofil einlernbar und abspeicherbar. Gegebenenfalls können die personalisierten Bewegungsprofile durch den Benutzer beispielsweise mit einem persönlichen Freischaltcode freigeschaltet werden, so dass diese nur für ihn zugänglich sind. Zum Freischalten eignet sich beispielsweise ein drahtloses Freischaltsignal, das vom Benutzer beispielsweise mittels einer Fernbedienung übertragen werden kann.

Bei den physikalischen Zustandsgrößen, die über die Sensorikeinrichtung messbar bzw. erfassbar sind, kann es sich beispielsweise um Kraft, Druck, Geschwindigkeit, Beschleunigung, Zeit und/oder Weg handeln.

Zweckmäßigerweise besitzt die Sensorikeinrichtung hierzu einen Zustandsgrößenaufnehmer. Besonders bevorzugst ist der Zustandsgrößenaufnehmer als Zustandsgrößensensor ausgebildet, wobei die gemessene physikalische Zustandsgröße in eine elektrische Spannung umgewandelt wird, die gegebenenfalls über einen Messverstärker verstärkt wird.

Zur Erfassung von vom Benutzer auf das bewegliche Möbelteil ausgeübter Kraft ist also ein Kraftaufnehmer, beispielsweise Kraftsensor, einsetzbar. Es sind alle denkbaren Arten von Kraftaufnehmern oder Kraftsensoren einsetzbar. Beispielsweise solche, die mit Dehnungsmessstreifen ausgestattet sind, deren elektrischer Widerstand sich mit der Dehnung ändert. Eine Alternative hierzu wären piezoelektrische Kraftaufnehmer.

Benutzer bedienen ein bewegbares Möbelteil auf ganz unterschiedliche Weise. Während manche Benutzer das bewegbare Möbelteil vorsichtig mit relativ geringer Kraft bedienen, beispielsweise öffnen oder schließen, neigen andere Benutzer dazu, das bewegbare Möbelteil ruckartig, also mit großer Kraft zu bewegen. Die aktuell vom Benutzer aufgebrachte Kraft kann also mittels des Kraftaufnehmers gemessen werden. Die erfasste Kraft korreliert mit einem bestimmten im Datenspeicher hinterlegten Bewegungsprofil, das dadurch abgerufen werden kann. Um beispielsweise zu verhindern, dass das vom Benutzer ruckartig bediente bewegbare Möbelteil in der Folge zu schnell weiterbewegt wird (typischer Beispielsfall: Das Zuschlagen einer Möbelklappe) kann ein Bewegungsprofil abgerufen werden, dass das bewegliche Möbelteil abbremst. Dadurch kann beispielsweise ein harter Anschlag in der Endlage oder im Falle einer Endlagendämpfung eine zu starke Beanspruchung der Endlagendämpfung verhindert werden. Umgekehrt ist im Falle einer niedrigen erfassten Kraft ein Bewegungsprofil abrufbar, das für eine Beschleunigung des bewegbaren Möbelteils sorgt und damit die Weiterbewegung des bewegbaren Möbelteils durch den Benutzer aktiv unterstützt. Das abgerufene Bewegungsprofil kann also auf die Aktion des Benutzers reagieren.

Es ist auch möglich, einen Beschleunigungsaufnehmer, insbesondere Beschleunigungssensor, einzusetzen. Im Datenpeicher können hierzu Bewegungsprofile abgespeichert sein, die einer, negativen oder positiven Beschleunigung des bewegbaren Möbelteils zugeordnet sind. Anstelle oder zusätzlich zur Erfassung der vom Benutzer ausgeübten Kraft kann also die Beschleunigung gemessen werden, was zu demselben Ergebnis führen kann wie vorstehend beschrieben, das also bei einer großen Beschleunigung ein Bewegungsprofil abgerufen wird, das das bewegbare Möbelteil abbremst.

Bei einer Weiterbildung der Erfindung ist wenigstens eines der abgespeicherten Bewegungsprofile einem bestimmten Bewegungsweg und nach dessen Zurücklegung einer bestimmten Stellung des beweglichen Möbelteils zugeordnet, wobei vorzugsweise unmittelbar nach Erreichen dieser Stellung oder nach Verstreichen eines einstellbaren Zeitfensters das Bewegungsprofil anfängt abzulaufen. Hierzu kann der Zustandsgrößenaufnehmer beispielsweise als Wegaufnehmer ausgebildet sein. Zeitfenster werden vorzugsweise dann angewandt, wenn ein bewegbares Möbelteil geöffnet und nicht mehr geschlossen wird. Nach Ablauf des Zeitfensters kann sich das bewegbare Möbelteil ohne Zutun des Benutzers automatisch schließen.

Die abgespeicherten oder abspeicherbaren Bewegungsprofile können beliebiger Art sein. So kann beispielsweise ein Bewegungsprofil abgespeichert sein, bei dessen Aktivierung sich das bewegliche Möbelteil nur zur Hälfte öffnet. Ferner kann mittels der Bewegungsprofile auf Hindernisse im Bewegungsweg des bewegbaren Möbelteils reagiert werden. Beispielsweise durch Messung der auf das bewegbare Möbelteil ausgeübten Kraft, die im Falle eines Hindernisses sehr groß wird, oder durch Messung der Geschwindigkeit, die dann gleich Null wird. Ist dies der Falls, kann das bewegbare Möbelteil durch das abgerufene Bewegungsprofil beispielsweise in seine Ausgangslage zurückbewegt werden. Wie bereits erwähnt ist die Abspeicherbarkeit individueller Bewegungsprofile, die auf einen bestimmten Benutzer abgestimmt sind, ein wichtiger Aspekt. Dadurch ist es möglich, dass das bewegliche Möbelteil mit einer vom Benutzer gewünschten Geschwindigkeit geöffnet wird oder auch, wie vom Benutzer gewünscht, nicht vollständig öffnet und/oder nach einem bestimmten Zeitfenster wieder selbsttätig schließt.

Erfindungsgemäß weist die Sensorikeinrichtung einen Vergleicher zum Vergleich von erfassten physikalischen Zustandsgrößen mit im Datenspeicher abgelegten und bestimmten Bewegungsprofilen zugeordneten physikalischen Zustandsgrößen auf. Zweckmäßigerweise werden die erfassten physikalischen Zustandsgrößen in elektrische Signale umgewandelt und mittels Signalübertragung, beispielsweise drahtlos, an den Vergleicher übermittelt. Im Vergleicher kann dann ein Vergleich des erfassten Ist-Werts der physikalischen Zustandsgröße mit abgespeicherten Messwerten, die jeweils einem bestimmten Bewegungsprofil zugeordnet sind, erfolgen. Stimmen die Werte überein oder liegen innerhalb eines bestimmten Toleranzbereichs, wird das Bewegungsprofil abgerufen.

Zweckmäßigerweise besitzt die Sensorikeinrichtung eine Steuer- bzw. Regeleinheit zur Steuerung bzw. Regelung des Stellantriebs. Zweckmäßigerweise befindet sich der Vergleicher innerhalb der Steuer- bzw. Regeleinheit. Es ist möglich, die Signalverarbeitung innerhalb der Steuer- bzw. Regeleinheit durchzuführen. Hierzu kann die Steuer- bzw. Regeleinheit beispielsweise mit einem Prozessor ausgestattet sein. Alternativ oder zusätzlich zur Steuer- bzw. Regeleinheit an Bord der Sensorikeinrichtung ist auch eine externe Steuer- bzw. Regeleinheit einsetzbar. In bevorzugter Weise steuert/regelt die Steuer- bzw. Regeleinheit den Stellantrieb hinsichtlich dessen Drehzahl bzw. dessen Drehmoment.

Es ist möglich, dass die Sensorikeinrichtung mehrere Zustandsgrößenaufnehmer verschiedener Art, beispielsweise wenigstens einen Wegaufnehmer und wenigstens einen Kraftaufnehmer aufweist.

Es ist möglich, dass der Zustandsgrößensensor mit elektrischer Hilfsenergie betrieben wird, die vorzugsweise aus der Bewegung des beweglichen Möbelteils gewinnbar ist. Dadurch kann auf Batterien oder Akkus zur elektrischen Versorgung verzichtet werden. Selbstverständlich ist es alternativ oder zusätzlich auch möglich, den Zustandsgrößensensor mit Akkus oder Batterien zu betreiben.

Bei einer Weiterbildung der Erfindung ist der Stellantrieb als elektrischer Stellantrieb ausgebildet. Prinzipiell wäre auch ein pneumatischer Stellantrieb denkbar.

## Patentansprüche

1. Vorrichtung zum Bewegen eines an einem Möbelkorpus bewegbar aufgenommenen Möbelteils, insbesondere Klappe, Tür oder Schublade, mit einem Stellantrieb, der in einem Antriebsmodus mit dem bewegbaren Möbelteil verbunden ist und das bewegbare Möbelteil antreibt, und mit einer mit dem Stellantrieb verbundenen Sensorikeinrichtung zur Ansteuerung des Stellantriebs, wobei die Sensorikeinrichtung einen Datenspeicher aufweist und derart ausgebildet ist, dass im montierten Nutzzustand der Vorrichtung über den Benutzer auf das bewegliche Möbelteil einwirkende für die Kontrolle dessen Bewegung dienende physikalische Zustandsgrößen erfassbar sind und in den Datenspeicher einlesbar sind, wobei im Datenspeicher Bewegungsprofile abgespeichert oder abspeicherbar sind, die jeweils einer bestimmten durch Einwirken auf das bewegliche Möbelteil von außen ausgelöste und durch physikalische Zustandsgrößen beschreibbare Bewegungssituation des beweglichen Möbelteils zugeordnet sind, und wobei die Sensorikeinrichtung einen Vergleicher zum Vergleich des erfassten Ist-Wertes der physikalischen Zustandsgröße mit im Datenspeicher abgespeicherten, jeweils einem bestimmten Bewegungsprofil zugeordneten Messwerten aufweist, die Sensorikeinrichtung einen Betriebsmodus aufweist, in dem bereits abgespeicherte Bewegungsprofile aus dem Datenspeicher abrufbar sind, und wobei der Stellantrieb gemäß dem abgerufenen Bewegungsprofil ansteuerbar ist, **dadurch gekennzeichnet, dass** mit Hilfe des erfassten Ist-Wertes ein bestimmtes zugeordnetes Bewegungsprofil aus dem aus dem Datenspeicher abrufbar ist, falls der erfasste Ist-Wert mit einem abgespeicherten, einem bestimmten Bewegungsprofil zugeordneten Messwert übereinstimmt oder innerhalb eines bestimmten Toleranzbereichs liegt, und dass die Sensorikeinrichtung einen anstelle des Betriebsmodus aktivierbaren Lernmodus besitzt, in dem neue Bewegungsprofile während des Bewegens des beweglichen Möbelteils durch den Benutzer einlernbar und in den Datenspeicher abspeicherbar sind.

2. Vorrichtung nach einem der vorhergehenden Ansprüche, **dadurch gekennzeichnet, dass** wenigstens eines der abgespeicherten Bewegungsprofile einer negativen oder positiven Beschleunigung des beweglichen Möbelteils zugeordnet ist, wobei vorzugsweise über dieses Bewegungsprofil ein harter Anschlag des beweglichen Möbelteils in seinen Endlagen verhinderbar ist.

3. Vorrichtung nach einem der vorhergehenden Ansprüche, **dadurch gekennzeichnet, dass** wenigstens eines der abgespeicherten Bewegungsprofile einem bestimmten Bewegungsweg und nach dessen Zurücklegung einer bestimmten Stellung des beweglichen Möbelteils zugeordnet ist, wobei vorzugsweise unmittelbar nach Erreichen dieser Stellung oder nach Verstreichen eines einstellbaren Zeitfensters das Bewegungsprofil anfängt abzulaufen.

4. Vorrichtung nach einem der vorhergehenden Ansprüche, **dadurch gekennzeichnet, dass** die Sensorikeinrichtung wenigstens einen Zustandsgrößenaufnehmer, insbesondere Zustandsgrößensensor aufweist.

5. Vorrichtung nach einem der vorhergehenden Ansprüche, dass der Zustandsgrößenaufnehmer als Wegaufnehmer, insbesondere Wegsensor, zur Erfassung des Bewegungswegs des beweglichen Möbelteils ausgebildet ist.

6. Vorrichtung nach einem der vorhergehenden Ansprüche, **dadurch gekennzeichnet, dass** der Zustandsgrößenaufnehmer als Kraftaufnehmer, insbesondere Kraftsensor, ausgebildet ist.

7. Vorrichtung nach einem der Ansprüche 4 bis 6, **dadurch gekennzeichnet, dass** der Zustandsgrößensensor mit elektrischer Hilfsenergie betrieben ist, die vorzugsweise aus der Bewegung des beweglichen Möbelteils gewinnbar ist.

8. Vorrichtung nach einem der vorhergehenden Ansprüche, **dadurch gekennzeichnet, dass** die Sensorikeinrichtung eine Steuer- bzw. Regeleinheit zur Steuerung bzw. Regelung des elektrischen Antriebs aufweist.

9. Vorrichtung nach einem der vorhergehenden Ansprüche, **dadurch gekennzeichnet, dass** die Sensorikeinrichtung für eine drahtlose Signalübertragung zwischen sich und dem elektrischen Antrieb eingerichtet ist.

10. Vorrichtung nach einem der vorhergehenden Ansprüche, **dadurch gekennzeichnet, dass** der Stellantrieb als elektrischer Stellantrieb ausgebildet ist.

11. Möbel mit wenigstens einem bewegbaren Möbelteil, wie Klappe, Tür oder Schublade, **gekennzeichnet durch** eine Vorrichtung nach einem der Ansprüche 1 bis 10.

## Claims

1. Device for the movement of a furniture part held movably on a furniture carcass, in particular a flap, door or drawer, with an actuator which, in a drive mode, is connected to the movable furniture part and drives the movable furniture part, and with a sensor unit connected to the actuator for activating the actuator, wherein the sensor unit has a data memory and is designed so that, in the mounted state of use of the device, physical state variables acting via the user on the movable furniture part and serving for the control of its movement may be detected and read into the data memory, wherein movement profiles are or may be stored in the data memory, each assigned a specific movement situation of the movable furniture part, triggered from outside by action on the movable furniture part and capable of description by physical state variables, and wherein the sensor unit has a comparator for comparing the detected actual value of the physical state variable with measured values stored in the data memory, each assigned a specific movement profile, wherein the sensor unit has an operating mode in which already stored movement profiles may be retrieved from the data memory, and wherein the actuator may be activated in accordance with the retrieved movement profile, **characterised in that**, with the aid of the detected actual value, a specific assigned movement profile may be retrieved from the data memory if the detected actual value coincides with a stored measured value assigned a specific movement profile or lies with in a certain tolerance range, and that the sensor unit has a learning mode which may be activated instead of the operating mode, in which new movement profiles may be loaded in by the user and stored in the data memory during movement of the movable furniture part.

2. Device according to any of the preceding claims, **characterised in that** at least one of the stored movement profiles is assigned a negative or positive acceleration of the movable furniture part, wherein preferably through this movement it is possible to prevent a hard stop of the movable furniture part in its end positions.

3. Device according to any of the preceding claims, **characterised in that** at least one of the stored movement profiles is assigned a specific movement path and, after this has been covered, a specific position of the movable furniture part, wherein preferably the movement profile begins to lapse immediately after reaching this position or after a settable time window has elapsed.

4. Device according to any of the preceding claims, **characterised in that** the sensor unit has at least one state variable detector, in particular a state variable sensor.

5. Device according to any of the preceding claims, **characterised in that** the state variable detector is in the form of a position pick-up, in particular a position sensor, for detecting the movement path of the movable furniture part.

6. Device according to any of the preceding claims, **characterised in that** the state variable detector is in the form of a force detector, in particular a force sensor.

7. Device according to any of claims 1 to 6, **characterised in that** the state variable sensor is operated with electrical auxiliary power, preferably obtainable from the movement of the movable furniture part.

8. Device according to any of the preceding claims, **characterised in that** the sensor unit has a control or regulation unit for control or regulation of the electrical drive.

9. Device according to any of the preceding claims, **characterised in that** the sensor unit is set up for wireless signal transmission between itself and the electrical drive.

10. Device according to any of the preceding claims, **characterised in that** the actuator is in the form of an electrical actuator.

11. Furniture with at least one movable furniture part, such as a flap, door or drawer, **characterised by** a device according to any of claims 1 to 10.

## Revendications

1. Dispositif servant à déplacer une partie de meuble logée de manière à pouvoir être déplacée au niveau d'un corps de meuble, en particulier une trappe, une porte ou un tiroir, comprenant un entraînement de réglage, qui est relié, dans un mode d'entraînement, à la partie de meuble pouvant être déplacée et qui entraîne la partie de meuble pouvant être déplacé, et comprenant un système de détection relié à l'entraînement de réglage et servant à piloter l'entraînement de réglage, dans lequel le système de détection présente une mémoire de données et est réalisé de telle manière que dans l'état monté d'utilisation du dispositif par l'utilisateur, des grandeurs d'état physiques agissant sur la partie de meuble mobile et servant au contrôle de déplacement de cette dernière peuvent être détectées et peuvent être lues dans la mémoire de données, dans lequel des profils de déplacement sont ou peuvent être sauvegardés dans la mémoire de données, lesquels sont respectivement associés à une situation de déplacement donnée, déclenchée de l'extérieur par l'action exercée sur la partie de meuble mobile et pouvant être décrite par des grandeurs d'état physiques, de la partie de meuble mobile, et dans lequel le système de détection présente un comparateur servant à comparer la valeur réelle détectée des grandeurs d'état physiques aux valeurs de mesure sauvegardées dans la mémoire de données, respectivement associées à un profil de déplacement donné,
dans lequel
le système de détection présente un mode de fonctionnement, dans lequel des profils de déplacement déjà sauvegardés peuvent être appelés depuis la mémoire de données, et dans lequel l'entraînement de réglage peut être piloté selon le profil de déplacement appelé, **caractérisé en ce qu'**un profil de déplacement associé donné peut être appelé depuis la mémoire de données à l'aide de la valeur réelle détectée si la valeur réelle détectée coïncide avec une valeur de mesure sauvegardée associée à un profil de déplacement donné ou se trouve dans une plage de tolérance donnée, et que
le système de détection possède un mode d'apprentissage pouvant être activé en lieu et place du mode de fonctionnement, dans lequel de nouveaux profils de déplacement peuvent être programmés par l'utilisateur au cours du déplacement de la partie de meuble mobile et peuvent être sauvegardés dans la mémoire de données.

2. Dispositif selon l'une quelconque des revendications précédentes, **caractérisé en ce qu'**au moins un des profils de déplacement sauvegardés est associé à une accélération négative ou positive de la partie de meuble mobile, dans lequel de préférence une butée dure de la partie de meuble mobile dans ses positions de fin de course peut être empêchée par l'intermédiaire dudit profil de déplacement.

3. Dispositif selon l'une quelconque des revendications précédentes, **caractérisé en ce qu'**au moins un des profils de déplacement sauvegardés est associé à un trajet de déplacement donné et est associé, une fois replacé, à une position donnée de la partie de meuble mobile, dans lequel de préférence immédiatement après que ladite position a été atteinte ou qu'une fenêtre de temps pouvant être réglée s'est écoulée, le profil de déplacement commence à s'exécuter.

4. Dispositif selon l'une quelconque des revendications précédentes, **caractérisé en ce que** le système de détection présente au moins un capteur de grandeurs d'état, en particulier un détecteur de grandeurs d'état.

5. Dispositif selon l'une quelconque des revendications précédentes, **caractérisé en ce que** le capteur de grandeurs d'état est réalisé sous la forme d'un capteur de trajet, en particulier d'un détecteur de trajet, afin de détecter le trajet de déplacement de la partie de meuble mobile.

6. Dispositif selon l'une quelconque des revendications précédentes, **caractérisé en ce que** le capteur de grandeurs d'état est réalisé sous la forme d'un détecteur de force, en particulier d'un capteur de force.

7. Dispositif selon l'une quelconque des revendications 4 à 6, **caractérisé en ce que** le détecteur de grandeurs d'état fonctionne avec une énergie auxiliaire électrique, qui peut être obtenue de préférence du déplacement de la partie de meuble mobile.

8. Dispositif selon l'une quelconque des revendications précédentes, **caractérisé en ce que** le système de détection présente une unité de commande ou de régulation servant à commander ou à réguler l'entraînement électrique.

9. Dispositif selon l'une quelconque des revendications précédentes, **caractérisé en ce que** le système de détection est mis au point en vue d'une transmission sans fil de signaux entre lui-même et l'entraînement électrique.

10. Dispositif selon l'une quelconque des revendications précédentes, **caractérisé en ce que** l'entraînement de réglage est réalisé sous la forme d'un entraînement de réglage électrique.

11. Meuble comprenant au moins une partie de meuble pouvant être déplacé, telle qu'une trappe, une porte ou un tiroir, **caractérisé par** un dispositif selon l'une quelconque des revendications 1 à 10.
